# EUROPÄISCHE PATENTSCHRIFT

(11) **EP 3 644 807 B1**
(45) Veröffentlichungstag und Bekanntmachung des Hinweises auf die Patenterteilung: **09.06.2021**
(21) Anmeldenummer: 18720092.8
(22) Anmeldetag: 12.04.2018
(51) Int. Cl.: A47J 36/06

(54) **DECKELDREHGELENK**
COVER SWIVEL JOINT
JOINT ROTATIF DE COUVERCLE

(30) Priorität: 27.06.2017 DE 102017210842
(43) Veröffentlichungstag der Anmeldung: 06.05.2020
(73) Patentinhaber: Gebr. Echtermann GmbH & Co. KG, 58644 Iserlohn (DE)
(72) Erfinder: BRUNE, Rene, 58644 Iserlohn (DE)
(74) Vertreter: Hoefer & Partner Patentanwälte mbB
(86) Internationale Anmeldenummer: PCT/DE2018/100345
(87) Internationale Veröffentlichungsnummer: WO 2019/001609

(56) Entgegenhaltungen:
- WO-A1-2009/129673
- DE-U- 6 812 668
- KR-A- 20170 063 106
- KR-U- 20010 000 379
- US-A1- 2005 279 225

## Beschreibung

Die vorliegende Erfindung betrifft ein Deckeldrehgelenk sowie einen Kochkessel für Großküchen mit einem erfindungsgemäßen Deckeldrehgelenk.

Deckeldrehgelenke werden bei Großküchengeräten wie z.B. Großkesseln oder Kochkesselanlagen zur Verbindung zwischen dem Kessel und einem Deckel verwendet. Derartige Deckeldrehgelenke müssen neben hygienischen Anforderungen auch Vorschriften einschlägiger Berufsgenossenschaften insbesondere hinsichtlich Arbeitssicherheit erfüllen. Ein Problemkreis in derartigen Großküchen ist hierbei, dass häufig eine Vielzahl von Küchengeräten und Armaturen usw. vorhanden sind. Beim Öffnen des Deckels kann es somit vorkommen, dass der Deckel unbeabsichtigterweise an derartige Einrichtungen anschlägt und hier Beschädigungen an der Einrichtung und/oder am Deckel vorkommen können. Ein derartiges Deckeldrehgelenk ist beispielsweise aus der DE 8311702 U1 bekannt, welches eine Gewichtsentlastung des Deckels aufweist. Ferner ist aus der DE 6812668 U ein Deckeldrehgelenk mit den Merkmalen des Oberbegriffs des Anspruchs 1 bekannt.

Es ist daher Aufgabe der vorliegenden Erfindung, ein Deckeldrehgelenk eines Küchenarbeitsgerätes bereitzustellen, welches bei einfachem Aufbau und einfacher, kostengünstiger Herstellbarkeit einen Öffnungsweg des Deckels verstellbar begrenzt.

Diese Aufgabe wird durch ein Deckeldrehgelenk und ein Küchenarbeitsgerät mit den Merkmalen des Anspruchs 1 bzw. ein Küchenarbeitsgerät mit den Merkmalen des Anspruchs 10 gelöst. Die Unteransprüche zeigen bevorzugte Ausgestaltungen der Erfindung.

Das erfindungsgemäße Deckeldrehgelenk eines Küchenarbeitsgeräts mit den Merkmalen des Anspruchs 1 weist demgegenüber den Vorteil auf, dass eine Verstellung des Deckels relativ zu einem Kessel oder dgl. möglich ist, um einen maximalen Öffnungswinkel einzustellen. Hierbei ist das erfindungsgemäße Deckeldrehgelenk sehr robust und kompakt aufgebaut, so dass auch schwere Deckel eines Großküchenkessels oder dgl. sicher geöffnet und geschlossen werden können. Das erfindungsgemäße Deckeldrehgelenk umfasst dabei einen ersten und einen zweiten Lagerbock, welche beide ortsfest vorgesehen sind. Zwischen dem ersten und zweiten Lagerbock ist drehbar ein Mittelstück angeordnet. Im Mittelstück ist ein mit dem ersten Lagerbock verbundenes, ortsfestes erstes Kurvenelement mit einer ersten Kurvenbahn und einem Anschlag angeordnet. Ferner umfasst das Mittelstück ein fest mit dem Mittelstück verbundenes zweites Kurvenelement mit einer zweiten Kurvenbahn. Die erste und zweite Kurvenbahn sind dabei miteinander im Gleiteingriff. Ferner umfasst das Deckeldrehgelenk eine Verstelleinrichtung, welche eingerichtet ist, einen maximalen Verdrehwinkel zwischen dem Mittelstück und dem ersten und zweiten Lagerbock festzulegen. Somit ist in das erfindungsgemäße Deckeldrehgelenk eine Verstelleinrichtung integriert, welche einen Verstellwinkel zwischen dem Deckel und einem Kessel oder dgl. festlegen kann.

Vorzugsweise ist die Verstelleinrichtung am ersten Lagerbock angeordnet. Hierdurch kann eine besonders kompakte Ausgestaltung des Deckeldrehgelenks mit Verstelleinrichtung ermöglicht werden. Insbesondere muss die Verstelleinrichtung hierbei nicht in das Mittelstück des Deckeldrehgelenks integriert werden, da aufgrund der Verdrehmechanik im Mittelstück kein Bauraum für eine derartige Verstelleinrichtung vorhanden ist, ohne dass aufwendige konstruktive Lösungen gefunden werden müssten. Durch die Anordnung der Verstelleinrichtung am ersten Lagerbock kann eine einfache und kostengünstige Lösung ermöglicht werden.

Weiter bevorzugt umfasst die Verstelleinrichtung eine Verstellronde mit einer Vielzahl von Durchgangsöffnungen, wenigstens einen Fixierstift und eine Vielzahl von Öffnungen im ersten Lagerbock. Dabei ist die Verstellronde relativ zum ersten Lagerbock verdrehbar und mittels des Fixierstifts am ersten Lagerbock fixierbar. Die Öffnungen im Lagerbock sind vorzugsweise Sacklochöffnungen. Hierdurch kann eine besonders einfache, kostengünstige und sehr robuste Verstelleinrichtung bereitgestellt werden. Ferner ist, falls notwendig, ein einfaches und schnelles Verstellen eines Verstellwinkels eines Deckels des Küchenarbeitsgerätes möglich.

Eine weitere Vereinfachung des Aufbaues ist möglich, wenn die Verstelleinrichtung vorzugsweise zwischen der Verstellronde und dem ersten Kurvenelement eine formschlüssige Verbindung aufweist. Die formschlüssige Verbindung ist vorzugsweise eine Vierkantverbindung mit einem Vierkant und einer entsprechend dem Vierkant gebildeten Vierkantöffnung.

Besonders bevorzugt weist die formschlüssige Verbindung eine Kontaktfläche auf und der Anschlag weist am ersten Kurvenelement eine Anschlagfläche auf. Hierbei sind die Kontaktfläche und die Anschlagfläche in einer gemeinsamen Ebene angeordnet oder alternativ in jeweils einer Ebene, welche zueinander parallel sind. Die Ebenen sind bei geschlossenem Deckel besonders bevorzugt senkrecht zu einer Vertikalen ausgerichtet. Hierdurch lässt sich auf einfache Weise eine schnelle Verstellung des Öffnungsgrads eines Deckels eines Küchenarbeitsgeräts verwirklichen, wobei insbesondere die Ebene ein Indikator für den gewählten Winkel ist. Bei einer Vierkantverbindung ist bevorzugt eine Ebene des Vierkants parallel zur Anschlagfläche bzw. die beiden liegen in einer gemeinsamen Ebene.

Gemäß einer weiteren bevorzugten Ausgestaltung der vorliegenden Erfindung sind die Durchgangsöffnungen der Verstellronde auf einem gemeinsamen Durchmesser angeordnet und weisen besonders bevorzugt jeweils einen konstanten Abstand von zueinander benachbarten Durchgangsöffnungen auf. Der Abstand zwischen benachbarten Durchgangsöffnungen ist vorzugsweise derart gewählt, dass eine Verstellung im 5°-Abstand möglich ist.

Ein besonders kompakter und einfacher Aufbau mit einer schnellen Verstellmöglichkeit ist gegeben, wenn die Verstelleinrichtung in den Lagerbock integriert ist.

Besonders bevorzugt weist der erste Lagerbock eine kreisförmige Aussparung auf, in welcher die Verstellronde angeordnet ist. Die Verstellronde ist vorzugsweise vollständig in der Aussparung aufgenommen. Somit muss kein zusätzlicher Bauraum für die erfindungsgemäße Verstelleinrichtung vorgesehen werden.

Der Fixierstift ist vorzugsweise als Zylinderstift ausgebildet. Weiter bevorzugt ist zwischen dem Fixierstift und der Durchgangsöffnung in der Verstellronde bzw. der Öffnung im ersten Lagerbock eine kraftschlüssige Verbindung vorgesehen.

Ferner betrifft die vorliegende Erfindung ein Küchenarbeitsgerät, insbesondere einen Kochkessel oder dgl., umfassend einen Deckel, einen Kessel und ein Deckeldrehgelenk gemäß der vorliegenden Erfindung.

Nachfolgend wird unter Bezugnahme auf die begleitende Zeichnung ein Ausführungsbeispiel der Erfindung im Detail beschrieben. In der Zeichnung ist:
- Fig. 1: eine schematische, perspektivische Ansicht eines Deckeldrehgelenks eines Kochkessels gemäß einem ersten Ausführungsbeispiel der Erfindung,
- Fig. 2: eine schematische, perspektivische Ansicht von Einzelteilen des Deckelgelenks von Fig. 1,
- Fig. 3: eine schematische Schnittansicht des Deckeldrehgelenks von Fig. 1,
- Fig. 4: eine perspektivische, schematische Explosionsdarstellung einer Verstelleinrichtung des Deckeldrehgelenks von Fig. 1, und
- Fig. 5a-5c: schematische Darstellungen der Verstelleinrichtung in unterschiedlichen Verstellwinkeln.

Nachfolgend wird unter Bezugnahme auf die begleitenden Figuren ein Deckeldrehgelenk 1 gemäß einem bevorzugten Ausführungsbeispiel der Erfindung im Detail beschrieben.

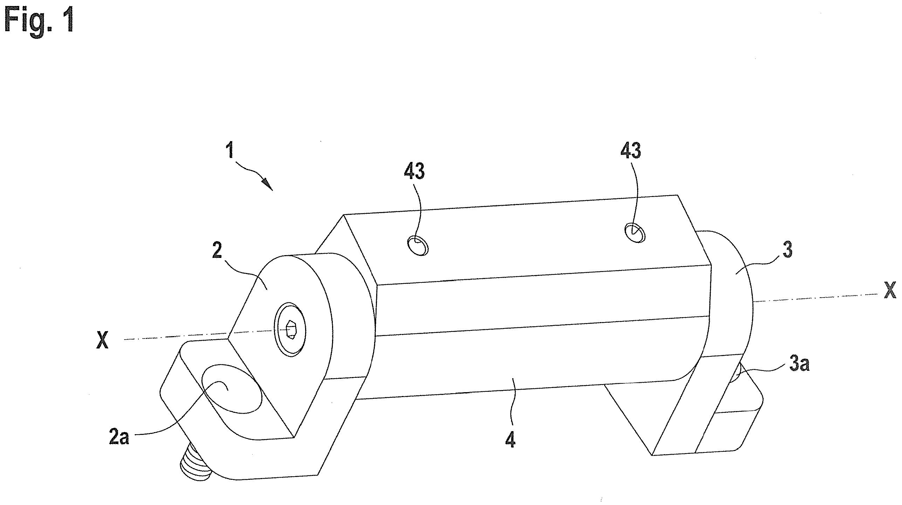

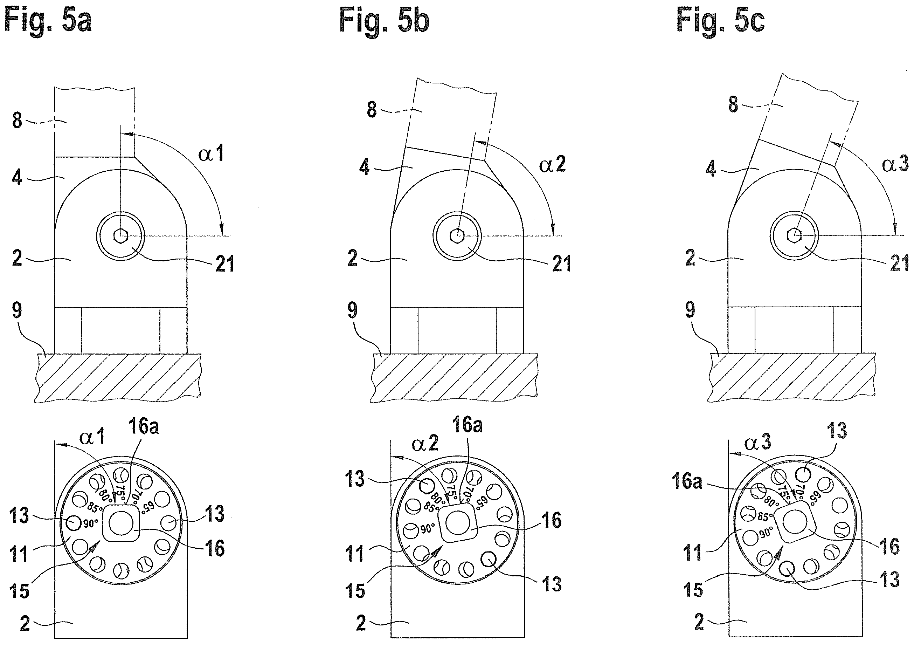

Wie aus der schematischen Fig. 1 ersichtlich ist, umfasst das Deckeldrehgelenk 1 einen ortsfesten ersten Lagerbock 2, einen ortsfesten zweiten Lagerbock 3 und ein Mittelstück 4. Das Mittelstück 4 ist drehbar zwischen dem ersten und zweiten Lagerbock 2, 3 angeordnet. Das Deckeldrehgelenk dieses Ausführungsbeispiels ist an einem Küchenarbeitsgerät angeordnet, um einen Deckel 8 an einem Kessel 9 zu öffnen und zu schließen. Der Deckel 8 und der Kessel 9 sind schematisch in den Fig. 5a bis 5c angedeutet.

Der Deckel 8 ist dabei am Mittelstück 4 an den in Fig. 1 schematisch eingezeichneten Gewindebohrungen 43 fixiert. Der erste Lagerbock 2 und der zweite Lagerbock 3 sind mittels Schraubbolzen 2a, 3a am Kessel fixiert.

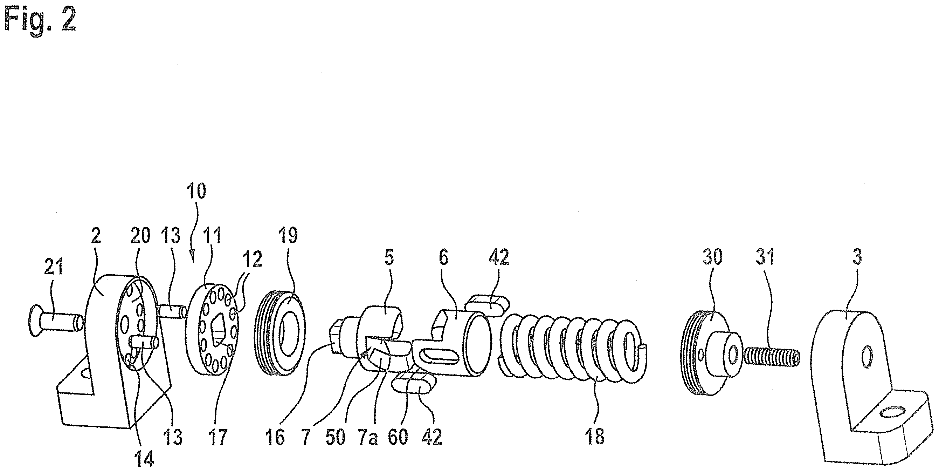

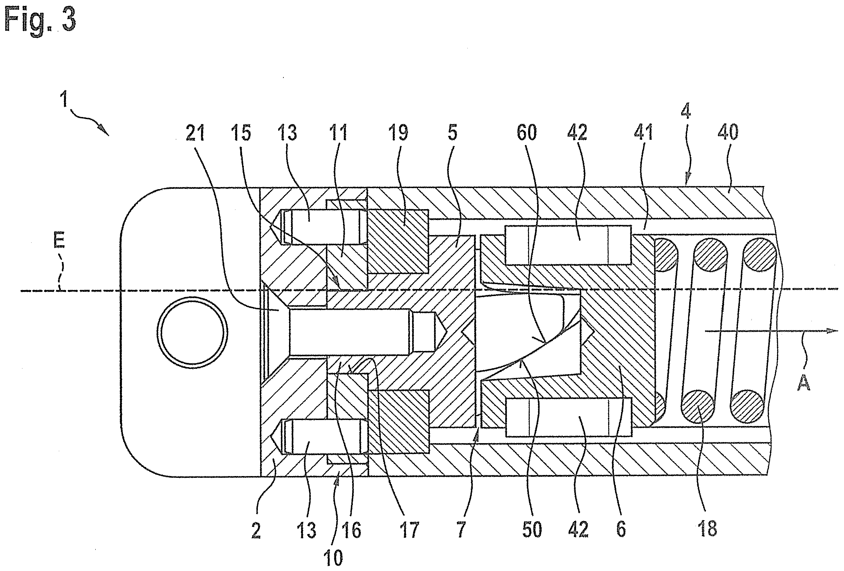

Der Aufbau des Deckeldrehgelenks 1 ist aus den Fig. 2 und 3 ersichtlich. Das Deckeldrehgelenk 1 umfasst dabei ein erstes Kurvenelement 5 und ein zweites Kurvenelement 6. Das erste Kurvenelement 5 ist ortsfest mit dem ersten Lagerbock 2 verbunden. Am ersten Kurvenelement ist hierbei eine erste Kurvenbahn 50 vorgesehen. Zwischen dem ersten Lagerbock 2 und dem ersten Kurvenelement 5 ist eine erste Zwischenscheibe 19 angeordnet.

Das zweite Kurvenelement 6 weist eine zweite Kurvenbahn 60 auf, welche sich in Gleiteingriff mit der ersten Kurvenbahn 50 des ersten Kurvenelements 5 befindet. Das zweite Kurvenelement 6 stützt sich über eine Vorspannfeder 18 und eine zweite Zwischenscheibe 30 am zweiten Lagerbock 3 ab.

Das Mittelstück 4 weist ein Gehäuse 40 auf, in welchem die vorgenannten Bauteile angeordnet sind. Wie insbesondere aus Fig. 3 ersichtlich ist, sind im Gehäuse 40 zwei Nuten 41 vorgesehen, in welche zwei Federsteine 42 eingreifen. Die Federsteine 42 befinden sich auch mit dem zweiten Kurvenelement 6 in formschlüssigem Eingriff, so dass bei einer Rotation eine Axialbewegung des zweiten Kurvenelements 6 in Axialrichtung X-X des Deckeldrehgelenks entgegen der Federkraft der Vorspannfeder 18 möglich ist.

Der erste Lagerbock 2 und das erste Kurvenelement 5 sind beide ortsfest und über einen Schraubbolzen 21 fixiert. Ebenso sind die zweite Zwischenscheibe 30 und der zweite Lagerbock 3 mittels eines Schraubbolzens 31, in diesem Ausführungsbeispiel ein Gewindestift, miteinander fixiert. Die Vorspannfeder 18 stützt sich somit zwischen der zweiten Zwischenscheibe 30 und dem zweiten Kurvenelement 6 ab.

Bei einem Schwenken des Deckels ergibt sich somit eine Relativbewegung zwischen dem Mittelstück 4 und den beiden Lagerböcken 2, 3, wobei sich das zweite Kurvenelement 6 in Richtung des Pfeils A entgegen der Kraft der Vorspannfeder 18 bewegt.

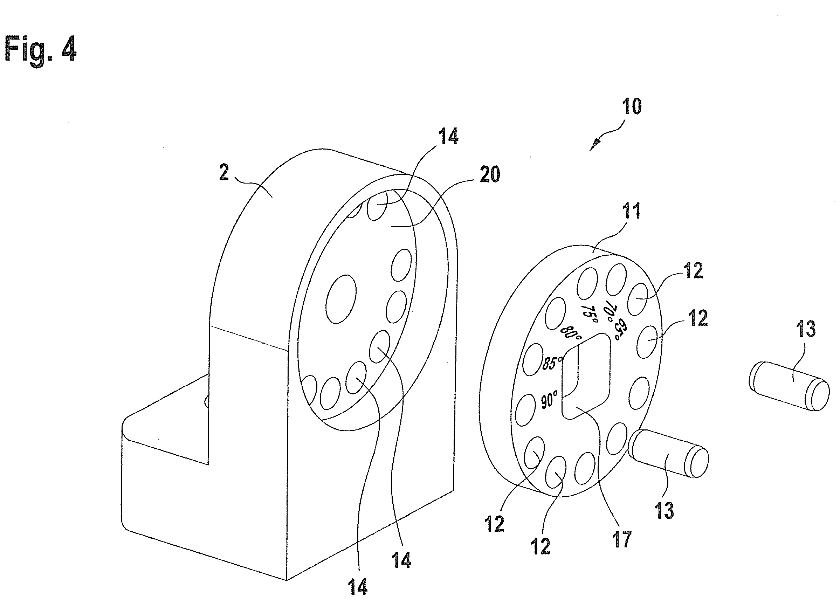

Weiterhin umfasst das Deckeldrehgelenk 1 eine Verstelleinrichtung 10. Die Verstelleinrichtung 10 ist im Detail aus den Fig. 4 sowie 5a, 5b und 5c ersichtlich.

Die Verstelleinrichtung 10 ist in den ersten Lagerbock 2 integriert, so dass ein besonders kompakter und platzsparender Aufbau möglich ist. Die Verstelleinrichtung 10 ist eingerichtet, einen maximalen Verdrehwinkel zwischen dem Mittelstück 4 und den beiden Lagerböcken 2, 3 festzulegen.

Wie insbesondere aus Fig. 4 ersichtlich ist, umfasst die Verstelleinrichtung 10 eine Verstellronde 11 mit einer Vielzahl von Durchgangsöffnungen 12. Ferner umfasst die Verstelleinrichtung 10 zwei Fixierstifte 13 in Form von Zylinderstiften. Weiterhin umfasst die Verstelleinrichtung 10 eine Vielzahl von Öffnungen 14 in Form von Sacklochöffnungen, welche zur teilweisen Aufnahme der Fixierstifte 13 dienen. Dabei ist die Verstellronde 11 vollständig in einer Ausnehmung 20 im zweiten Lagerbock 3 aufgenommen. Die Verstellronde 11 ist ferner relativ zum ersten Lagerbock 2 verdrehbar und mittels der Fixierstifte 13 am ersten Lagerbock fixierbar.

Wie aus Fig. 4 ersichtlich ist, weist die Verstellronde 11 eine Vierkantöffnung 17 auf. Weiterhin weist das erste Kurvenelement 5 einen Vierkant 16 auf. Wie in Fig. 3 dargestellt, ist im montierten Zustand eine formschlüssige Verbindung 15 zwischen dem ersten Kurvenelement 5 und dem ersten Lagerbock 2 vorhanden und mittels der Fixierstifte 13 fixiert.

Dabei ist ein Vierkant 16 am ersten Kurvenelement 5 ausgebildet, welcher formschlüssig in der Vierkantöffnung 17 in der Verstellronde 11 aufgenommen ist.

Weiterhin ist am ersten Kurvenelement 5 ein Anschlag 7 ausgebildet, welcher die Drehbewegung des zweiten Kurvenelements 6 relativ zum ersten Kurvenelement 5 begrenzt. Mittels der Verstelleinrichtung 10 kann nun eine Position dieses Anschlags 7 einfach und schnell verstellt werden. Wie aus den Fig. 2 und 3 ersichtlich ist, weist der Anschlag 7 eine Anschlagfläche 7a auf und die formschlüssige Verbindung 15 weist am Vierkant 16 eine Kontaktfläche 16a auf. Dabei liegen die Anschlagfläche 7a und die Kontaktfläche 16a in einer gemeinsamen Ebene E (vgl. Fig. 3).

Durch die Vielzahl der Durchgangsöffnungen 12, welche auf einem gemeinsamen Durchmesser mit jeweils konstanten Abständen zu benachbarten Durchgangsöffnungen 12 angeordnet sind und die Vielzahl der entsprechend gebildeten Öffnungen 14 im ersten Lagerbock 2 kann nun nach Entfernen der Fixierstifte 13 eine Relativverstellung der Verstellronde 11 relativ zum ersten Lagerbock 2 erfolgen. In diesem Ausführungsbeispiel sind die vorgegebenen Verstellschritte in einem 5°-Abstand vorgesehen. Da der Vierkant 16 in die Vierkantöffnung 17 eingreift, welche bei einer Verstellung der Verstellronde 11 ebenfalls mitverstellt wird, wird auch der Anschlag 7 verstellt, so dass ein Öffnungswinkel eines Deckels gegenüber einem Kessel verändert wird. Die verstellte Position der Verstellronde 11 kann dabei mittels der Fixierstifte 13 anschließend fixiert werden.

Somit liegen auch bei einer Verstellung durch die Verstelleinrichtung 10 der Anschlag 7 mit seiner Anschlagfläche 7a und die Kontaktfläche 16a am Vierkant 16 immer in einer gemeinsamen Ebene E.

Somit ist die Verstelleinrichtung 10 vollständig in den ersten Lagerbock 2 integriert. Hierdurch ist kein zusätzlicher Raumbedarf für die Verstelleinrichtung 10 notwendig. Ferner kann eine Verstellung auf einfache und sichere Weise in vorbestimmten Winkelabschnitten, in diesem Ausführungsbeispiel in 5°-Schritten, erfolgen. Beispielhaft sind in den Fig. 5a bis 5c drei Winkelverstellungen dargestellt. Fig. 5a zeigt die Ausgangsposition des Deckels 8 relativ zum Kessel 9 in einem geöffneten Zustand im 90°-Winkel (Winkel a1). Fig. 5b zeigt eine Verstellung um 10°, so dass der Deckel 8 nur noch in einem Öffnungswinkel a2 von 80° öffenbar. Wie insbesondere aus dem unteren Bild von Fig. 5b ersichtlich ist, ist die Ebene E, in welcher die Anschlagfläche und die Kontaktfläche 16a liegen, um 10° relativ zu der in Fig. 5a dargestellten 90°-Ausbildung verändert. Fig. 5c zeigt einen dritten Öffnungswinkel a3 von 70°. Neben der einfachen Verstellung ist die erfindungsgemäße Verstelleinrichtung 10 auch sehr robust und kompakt aufgebaut. Ferner können die Einzelteile der Verstelleinrichtung 10 schnell auseinandergenommen werden, um einerseits eine schnelle Verstellung zu ermöglichen, und andererseits gegebenenfalls eine notwendige Reinigung zu ermöglichen, was insbesondere bei Küchenarbeitsgeräten notwendig ist.

### Bezugszeichenliste

- 1: Deckeldrehgelenk
- 2: erster Lagerbock
- 2a: Schraubbolzen
- 3: zweiter Lagerbock
- 3a: Schraubbolzen
- 4: Mittelstück
- 5: erstes Kurvenelement
- 6: zweites Kurvenelement
- 7: Anschlag
- 7a: Anschlagfläche
- 8: Deckel
- 9: Kessel
- 10: Verstelleinrichtung
- 11: Verstellronde
- 12: Durchgangsöffnungen
- 13: Fixierstift
- 14: Öffnung/Sacklochöffnung
- 15: formschlüssige Verbindung
- 16: Vierkant
- 16a: Kontaktfläche
- 17: Vierkantöffnung
- 18: Vorspannfeder
- 19: erste Zwischenscheibe
- 20: Ausnehmung
- 21: Schraubbolzen
- 30: zweite Zwischenscheibe
- 31: Schraubbolzen
- 40: Gehäuse
- 41: Nut
- 42: Federstein
- 43: Gewindebohrung
- 50: erste Kurvenbahn
- 60: zweite Kurvenbahn
- A: Bewegungsrichtung des zweiten Kurvenelements 6
- E: Ebene
- X-X: Axialrichtung
- α1-α3: Winkel

## Patentansprüche

1. Deckeldrehgelenk eines Küchenarbeitsgeräts zum Öffnen und Schließen eines Deckels, umfassend:
- einen ersten Lagerbock (2) und einen zweiten Lagerbock (3),
- eine zwischen dem ersten Lagerbock (2) und dem zweiten Lagerbock (3) drehbar angeordnetes Mittelstück (4),
- eine mit dem ersten Lagerbock (2) verbundenes, ortsfestes erstes Kurvenelement (5) mit einer ersten Kurvenbahn (50) und einem Anschlag (7), und
- ein mit dem Mittelstück (4) verbundenes zweites Kurvenelement (6) mit einer zweiten Kurvenbahn (60),
- wobei sich das erste und zweite Kurvenelement (5, 6) mittels der ersten und zweiten Kurvenbahn (50, 60) in Gleiteingriff befinden und ein maximaler Verstellwinkel durch den Anschlag (7) definiert ist,
- **gekennzeichnet durch**
- eine Verstelleinrichtung (10), welche eingerichtet ist, einen maximalen Verstellwinkel zwischen dem Mittelstück (4) und dem ersten und zweiten Lagerbock (2, 3) festzulegen.

2. Deckeldrehgelenk nach Anspruch 1, wobei die Verstelleinrichtung am ersten Lagerbock (2) angeordnet ist.

3. Deckeldrehgelenk nach einem der vorhergehenden Ansprüche, wobei die Verstelleinrichtung (10) eine Verstellronde (11) mit einer Vielzahl von Durchgangsöffnungen (12), wenigstens einen Fixierstift (13) und eine Vielzahl von Öffnungen (14) umfasst, wobei die Verstellronde (11) relativ zum ersten Lagerbock (2) verdrehbar ist und mittels des Fixierstifts (13) am ersten Lagerbock fixierbar ist.

4. Deckeldrehgelenk nach Anspruch 3, wobei die Verstelleinrichtung (10) zwischen der Verstellronde (11) und dem ersten Kurvenelement (5) eine formschlüssige Verbindung (15) umfasst.

5. Deckeldrehgelenk nach Anspruch 4, wobei die formschlüssige Verbindung (15) eine Kontaktfläche (16a) aufweist und der Anschlag (7) eine Anschlagfläche (7a) aufweist und wobei die Kontaktfläche (16a) und die Anschlagfläche (7a) in einer gemeinsamen Ebene (E) liegen oder in zueinander parallelen Ebenen liegen.

6. Deckeldrehgelenk nach Anspruch 4 oder 5, wobei die formschlüssige Verbindung eine Vierkantverbindung mit einem Vierkant (16) und einer Vierkantöffnung (17) ist.

7. Deckeldrehgelenk nach einem der vorhergehenden Ansprüche 3 bis 6, wobei die Durchgangsöffnungen (12) auf einem gemeinsamen Durchmesser liegen und/oder wobei zueinander benachbarte Durchgangsöffnungen (12) jeweils einen konstanten Abstand aufweisen.

8. Deckeldrehgelenk nach einem der vorhergehenden Ansprüche, wobei die Verstelleinrichtung (10) in den ersten Lagerbock (2) integriert ist.

9. Deckeldrehgelenk nach Anspruch 8, wobei der erste Lagerbock (2) eine Ausnehmung (20) aufweist, in welcher die Verstellronde (11) vollständig aufgenommen ist.

10. Küchenarbeitsgerät, insbesondere Kochkesselanordnung, umfassend einen Kessel (9), einen Deckel (8) und ein Deckeldrehgelenk (1) nach einem der vorhergehenden Ansprüche.

## Claims

1. A cover swivel joint of a kitchen utensil for opening and closing a cover, comprising:
- a first bearing block (2) and a second bearing block (3),
- a central piece (4) rotatably arranged between the first bearing block (2) and the second bearing block (3),
- a stationary first cam element (5) connected to the first bearing block (2) and having a first cam track (50) and a stop (7), and
- a second cam element (6) connected to the center piece (4) and having a second cam track (60),
- wherein the first and second cam elements (5, 6) are in sliding engagement by means of the first and second cam tracks (50, 60) and a maximum adjustment angle is defined by the stop (7),
- **characterized by**
- an adjustment means (10) which is arranged to define a maximum adjustment angle between the center piece (4) and the first and second bearing blocks (2, 3).

2. The cover swivel joint according to claim 1, wherein the adjustment means is arranged on the first bearing block (2).

3. The cover swivel joint according to one of the preceding claims, wherein the adjustment means (10) comprises an adjusting disc (11) comprising a plurality of through openings (12), at least one fixing pin (13) and a plurality of openings (14), wherein the adjusting disc (11) is rotatable in relation to the first bearing block (2) and fixable to the first bearing block by means of the fixing pin (13).

4. The cover swivel joint according to claim 3, wherein the adjustment means (10) comprises a positive connection (15) between the adjusting disc (11) and the first cam element (5).

5. The cover swivel joint according to claim 4, wherein the positive connection (15) has a contact surface (16a) and the stop (7) has a stop surface (7a), and wherein the contact surface (16a) and the stop surface (7a) are located in a common plane (E) or are located in mutually parallel planes.

6. The cover swivel joint according to claims 4 or 5, wherein the positive connection is a square connection including a square (16) and a square opening (17).

7. The cover swivel joint according to one of the preceding claims 3 to 6, wherein the through openings (12) are located on a common diameter and/or wherein each of mutually adjacent through openings (12) have constant spacings.

8. The cover swivel joint according to one of the preceding claims, wherein the adjustment means (10) is integrated in the first bearing block (2).

9. The cover swivel joint according to claim 8, wherein the first bearing block (2) comprises a recess (20) in which the adjusting disc (11) is completely accommodated.

10. A kitchen utensil, especially a cooking kettle assembly, comprising a kettle (9), a cover (8) and a cover swivel joint (1) according to any of the preceding claims.

## Revendications

1. Joint rotatif de couvercle d'un ustensile de cuisine pour l'ouverture et la fermeture d'un couvercle comprenant :
- un premier bloc de palier (2) et un second bloc de palier (3),
- une pièce médiane (4) agencée de manière à pouvoir tourner entre le premier bloc de palier (2) et le second bloc de palier (3),
- un premier élément de courbe (5) fixe, relié au premier bloc de palier (2) avec un premier trajet de courbe (50) et une butée (7), et
- un second élément de courbe (6) relié à la pièce médiane (4) avec un second trajet de courbe (60),
- dans lequel le premier et le second élément de courbe (5, 6) se trouvent au moyen du premier et du second trajet de courbe (50, 60) en prise coulissante et un angle de réglage maximal est défini par la butée (7),
- **caractérisé par**
- un dispositif de réglage (10) qui est conçu afin de fixer un angle de réglage maximal entre la pièce médiane (4) et le premier et le second bloc de palier (2, 3).

2. Joint rotatif de couvercle selon la revendication 1, dans lequel le dispositif de réglage est agencé au niveau du premier bloc de palier (2).

3. Joint rotatif de couvercle selon l'une des revendications précédentes, dans lequel le dispositif de réglage (10) comporte un flanc circulaire de réglage (11) avec une pluralité d'ouvertures de passage (12), au moins une tige de fixation (13) et une pluralité d'ouvertures (14), dans lequel le flanc circulaire de réglage (11) peut être tourné par rapport au premier bloc de palier (2) et peut être fixé au moyen de la tige de fixation (13) au premier bloc de palier.

4. Joint rotatif de couvercle selon la revendication 3, dans lequel le dispositif de réglage (10) comporte entre le flanc circulaire de réglage (11) et le premier élément de courbe (5) une liaison à complémentarité de formes (15).

5. Joint rotatif de couvercle selon la revendication 4, dans lequel la liaison à complémentarité de formes (15) présente une surface de contact (16a) et la butée (7) présente une surface de butée (7a) et dans lequel la surface en contact (16a) et la surface de butée (7a) se trouvent dans un plan commun (E) ou se trouvent dans des plans parallèles l'un à l'autre.

6. Joint rotatif de couvercle selon la revendication 4 ou 5, dans lequel la liaison à complémentarité de formes est une liaison carrée avec un carré (16) et une ouverture carrée (17).

7. Joint rotatif de couvercle selon l'une des revendications précédentes 3 à 6, dans lequel les ouvertures de passage (12) se trouvent sur un diamètre commun et/ou dans lequel des ouvertures de passage (12) contiguës les unes aux autres présentent respectivement une distance constante.

8. Joint rotatif de couvercle selon l'une des revendications précédentes, dans lequel le dispositif de réglage (10) est intégré dans le premier bloc de palier (2).

9. Joint rotatif de couvercle selon la revendication 8, dans lequel le premier bloc de palier (2) présente un évidement (20), dans lequel le flanc circulaire de réglage (11) est complètement reçu.

10. Ustensile de cuisine, en particulier agencement de marmite comprenant une bouilloire (9), un couvercle (8) et un joint rotatif de couvercle (1) selon l'une des revendications précédentes.
